# EUROPEAN PATENT SPECIFICATION

(11) **EP 2 560 874 B1**
(45) Date of publication and mention of the grant of the patent: **15.03.2017**
(21) Application number: 11772659.6
(22) Date of filing: 20.04.2011
(51) Int. Cl.: B64D 11/00

(54) **Aircraft luggage pivot bin assembly**
Schwenkbare Gepäckablageanordnung eines Flugzeuges
ENSEMBLE PORTE-BAGAGES À PIVOT D'AÈRONEF

(30) Priority: 20.04.2011 US 201113090937; 20.04.2010 US 325886 P
(43) Date of publication of application: 27.02.2013
(73) Proprietor: C&D Zodiac, Inc., Huntington Beach, CA 92647 (US)
(72) Inventor: LEE, Nick, Huntington Beach, CA 92647 (US); SAVIAN, Scott, Huntington Beach, CA 92647 (US)
(74) Representative: McGlashan, Graham Stewart
(86) International application number: PCT/US2011/033301
(87) International publication number: WO 2011/133702

(56) References cited:
- US-A- 4 637 642
- US-A- 4 917 747
- US-A1- 2006 214 055
- US-B2- 7 302 150

## Description

This application claims the benefit of U.S. Provisional Application No. 61/325,886, filed April 20, 2010, which is herein incorporated by reference in its entirety.

### FIELD OF THE INVENTION

The invention relates to a pivot bin assembly. In particular, the invention is contemplated for use with overhead storage bins on passenger aircraft.

### BACKGROUND OF THE INVENTION

Commercial passenger aircraft generally include overhead luggage storage bins mounted from the ceiling of the aircraft over the passenger seats. These bins are designed to accommodate the size, shape, and weight of passenger carry-on luggage. One type of overhead storage, the overhead pivot bin features a bin that pivots open from the ceiling of the aircraft. To support the weight of passenger luggage and to meet safety certifications, the fundamental latch design of the pivot bin has been standardized as a two-point latch system, where the latches/hooks are located at the ends of the bin since the pivot bin design inception. The two ends latch point design transmits downward forces in the pivot bin directly to the structural bulkhead panels of the pivot bin housing. This methodology has long been proven to qualify the Overhead Pivot Bin structure for the FAR25 certification stress and dynamic crash requirements.

US 7,302,150 is regarded as the closest prior art and relates to an illuminated latch indicator assembly. According to the abstract of this document an assembly is provided for providing an indicator which includes a light source, a stationary member, a first optical fiber coupled to the light source and to the stationary member, a moveable panel, and a first latch assembly coupling the stationary member and the moveable panel. The latch assembly has an unlatched position and a latched position. The assembly further includes a second optical fiber coupled to the moveable panel, an indicator coupled to the moveable panel, and a second optical fiber whereby in the last position, light from the first optical fiber is coupled to the second optical fiber differently than in the latch position.

### SUMMARY OF THE PREFERRED EMBODIMENTS

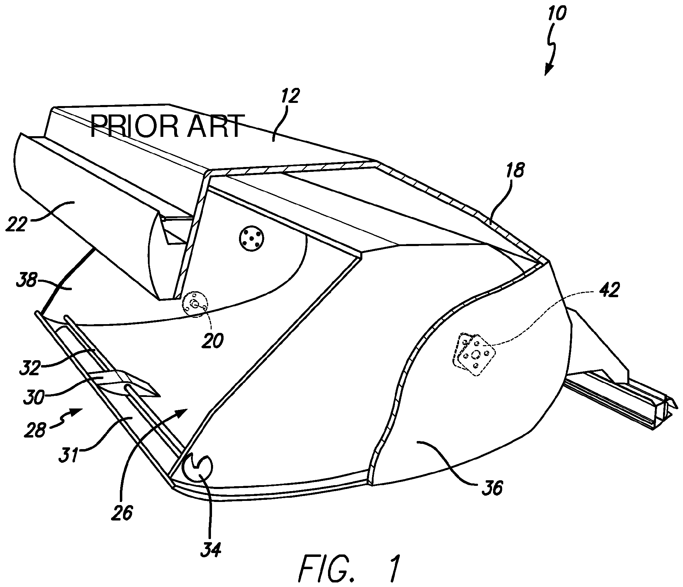

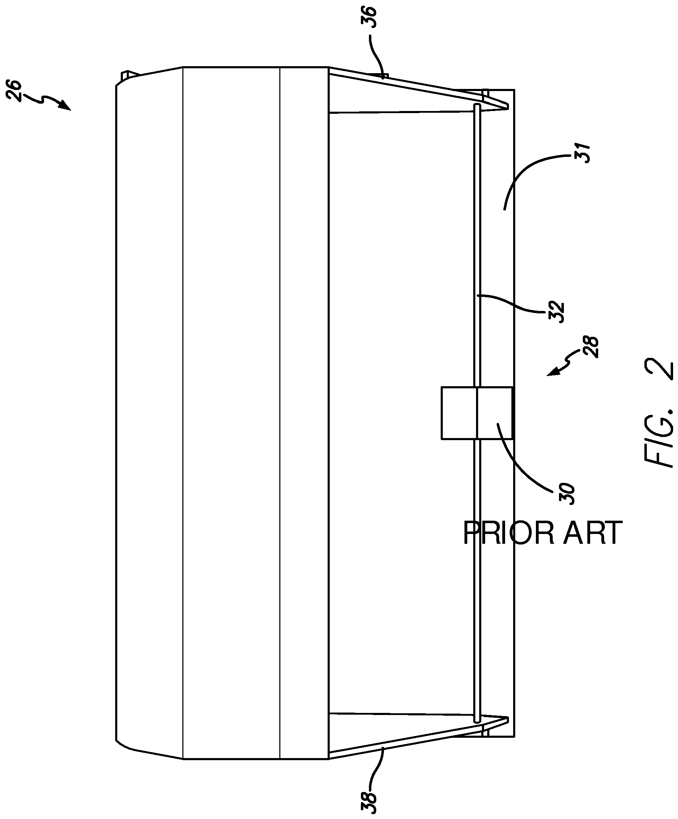

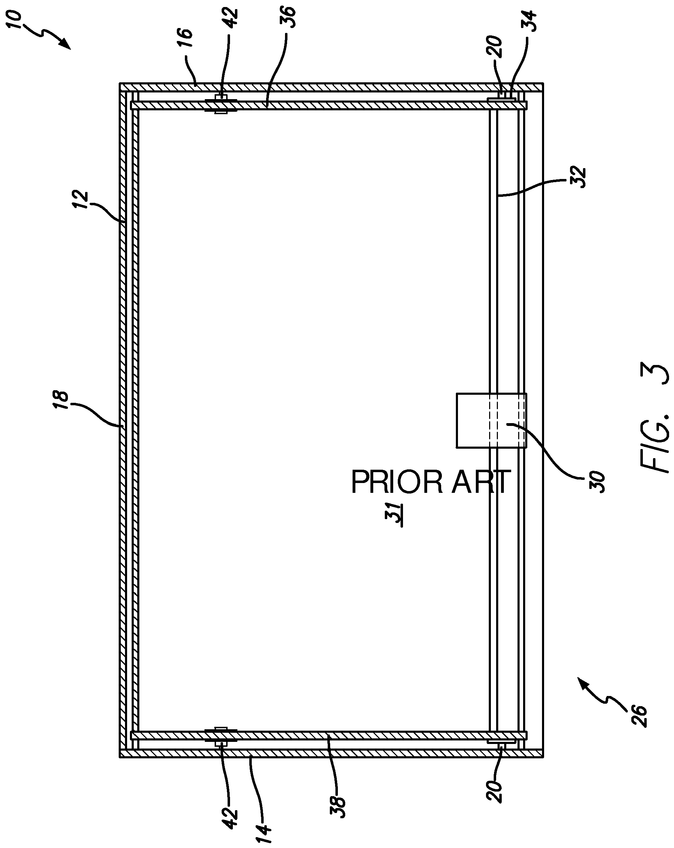

As shown in FIGS. 1-3, overhead pivot bin assembly 10 consists of a pivot bin housing 12. The housing 12 is typically constructed out of composite panels that are bonded together. There are three standard walls that comprise this bonded assembly; the forward and aft bulkhead panels 14 and 16 and the aft housing panel 18. The pivot bin housing 12 also includes strikers 20, a decorative valence panel 22, and a pivot mechanism 24 attached thereto. The decorative valence panel is a separate piece that is typically made of a material that is not capable of withstanding a significant load and that is attached to the aft housing panel. It is not a rigid component of the bulkhead of the aircraft and is there for decorative purposes only and to hide lighting that is contained therein.

In FIG. 1, a portion of the aft bulkhead panel 16 is cutaway to show the interior of the bin assembly. Even though a portion of the aft bulkhead panel is cutaway, the striker 20 is still shown in hidden lines in the proper location. The pivot bin 26 is mechanically fixed to the pivot housing 12 and is capable of opening and closing within the pivot bin housing 12. The pivot bin 26 creates a space for aircraft passengers to stow their belongings. The pivot bin 26 is fixed in its closed position via a latch system 28. This latch system 28 utilizes a center latch handle 30 mounted on the bin bottom 31 of the pivot bin 26 and that operates either a bar linkage or wire linkage (see bar linkage/transmission tube 32 in FIG. 1) to actuate latches 34 located on the aft and forward walls 36 and 38 of the pivot bin 26. The engagement latch strikers 20 are located on the forward and aft bulkhead panels 24 and 26 of the pivot bin housing 12 where the pivot bin 26 is secured in place when closed.

Although the two-latch point design allows the downward forces from the bin to be spread out across the pivot bin housing 12, the usage of a linkage to actuate the two latches 34 creates added complexity and weight. Many specially configured actuating mechanisms and latches have been designed to implement a two-point latching system. A single or center point latching pivot bin would not need an actuating linkage mechanism as there is only one latch to be operated by the latch handle, thereby reducing the overall complexity, weight, and cost of the pivot bin by eliminating the need for two latches, two strikers, two transmission tubes and protective covers for the mechanism and tubes. Also, the striker and latch can be reversed.

Other overhead storage bin assemblies are well known in the art. For example, see U.S. Patent No. 4,637,642 issued on January 20, 1987 and U.S. Patent No. 5,567,028 issued on October 22, 1996.

The present invention concerns a bin assembly as defined by the features of claim 1 and a method of providing a bin assembly as defined by the steps of claim 7.

In accordance with a first aspect of the present invention, there is provided a bin assembly that includes a bin housing and a bin that is movable between an open and a closed position within the bin housing. The bin housing includes a forward bulkhead panel, aft bulkhead panel and an aft housing panel that includes a rigid valence panel having one of a latch striker or a latch assembly secured thereto. The rigid valence panel has opposite ends that are secured to the forward and aft bulkhead panels. The bin includes an aft wall, a forward wall, a bin bottom and the other of a latch striker or a latch assembly secured to the bin bottom, thereby defining a latching location. A downward load in the bin is distributed from the latching location, along the rigid valence panel and to the aft and forward bulkhead panels.

In a preferred embodiment the latching location is located at approximately the center point between the aft wall and the forward wall of the bin and the rigid valence panel includes a front portion, a bottom portion and a rear portion that together define a valence panel interior for receiving lighting and latch assembly or the latch striker extend downwardly from the bottom portion of the rigid valence panel.

In accordance with another aspect of the present invention, there is provided a method that includes the steps of providing a bin assembly that includes a bin housing having a rigid valence panel for receiving lighting therein and a bin that is movable between an open and a closed position within the bin housing, moving the bin to the closed position, and latching the bin to the rigid valence panel.

In accordance with another aspect of the present invention, there is provided a pivot bin assembly that includes a pivot bin housing and first and second bins that are pivotable between opened and a closed positions within the pivot bin housing. The pivot bin housing includes an aft housing panel, a forward bulkhead panel, an aft bulkhead panel and a middle bulkhead panel. The aft housing panel includes a rigid valence panel that has opposite ends that are secured to the forward and aft bulkhead panels and the middle bulkhead panel is secured to the rigid valence panel. The rigid valence panel includes first and second latch assemblies that each have at least one hook extending downwardly therefrom. The first pivot bin is positioned between the forward and middle bulkhead panels and the second pivot bin is positioned between the middle and aft bulkhead panels. The first and second pivot bins each include an aft wall, a forward wall, a bin bottom and a latch striker secured to the bin bottom, thereby defining first and second latching locations. When the first and second pivot bins are in the closed position, downward loads in the first and second pivot bins are distributed from the first and second latching locations, along the rigid valence panel and to the aft, middle and forward bulkhead panels.

In a preferred embodiment, the rigid valence panel and the aft housing panel are formed as a unit by a molding process and the rigid valence panel includes a front portion, a bottom portion and a rear portion that together define a valence panel interior for receiving lighting. The hooks of the first and second latch assemblies extend downwardly from the bottom portion of the rigid valence panel. In another preferred embodiment, the first latching location is located at approximately the center point between the aft wall and the forward wall of the first pivot bin and the second latching location is located at approximately the center point between the aft wall and the forward wall of the second bin.

### BRIEF DESCRIPTION OF THE DRAWINGS

FIG. 1 is a perspective view of a prior art pivot bin assembly with the pivot bin in an open position and a portion of the aft bulkhead panel cutaway;
FIG. 2 is a top plan view of the prior art pivot bin assembly of FIG. 1 with the pivot bin housing removed;
FIG. 3 is a cross-sectional top plan view of the prior art pivot bin assembly of FIG. 1;
FIG. 4 is a perspective view of two pivot bin assemblies in a closed position in accordance with a first embodiment of the invention;
FIG. 5 is a front elevational view of the pivot bin assemblies of FIG. 4;
FIG. 6 is a cross-sectional side elevational view of the pivot bin assemblies of FIG. 4 taken along line 6--6 of FIG. 5;
FIG. 7 is a cross-sectional side elevational view of the pivot bin assemblies of FIG. 4 taken along line 7--7 of FIG. 5;
FIG. 8 is a perspective view of the pivot bin assemblies of FIG. 4 with one pivot bin in a closed position and the other in an open position;
FIG. 9 is a detail view of the latch mechanism taken from line 12--12 of FIG. 8;
FIG. 10 is a front elevational view of the pivot bin assemblies of FIG. 4 with one pivot bin in a closed position and the other in an open position;
FIG. 11 is a cross-sectional side elevational view of the pivot bin assemblies of FIG. 4 taken along line 11--11 of FIG. 10;
FIG. 12 is a perspective view of a second embodiment of a pivot bin assembly with the pivot bin in an open position and a portion of the aft bulkhead panel cutaway;
FIG. 13 is a front elevational view of the pivot bin assembly of FIG. 12 in a closed position; and
FIG. 14 is a cross-sectional side elevational view of the pivot bin assembly of FIG. 12 in a closed position.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted. It will be appreciated that the same thing can be said in more than one way.

Consequently, alternative language and synonyms may be used for any one or more of the terms discussed herein. Nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward" and "below" used herein are merely for ease of description and refer to the orientation of the components as shown in the figures. It should be understood that any orientation of the components described herein is within the scope of the present invention.

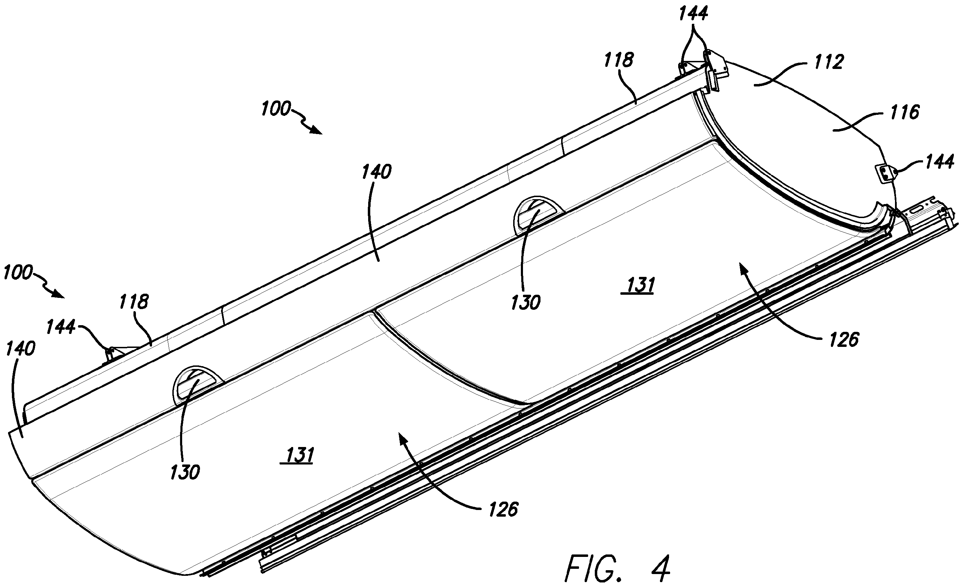

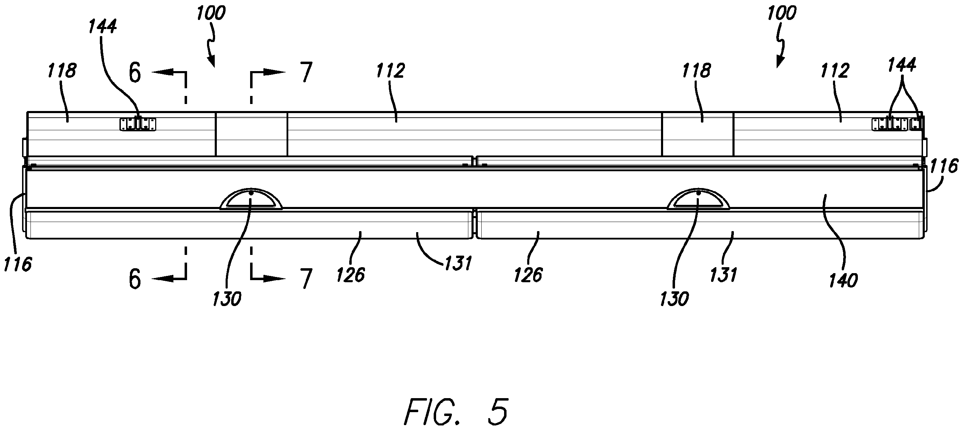

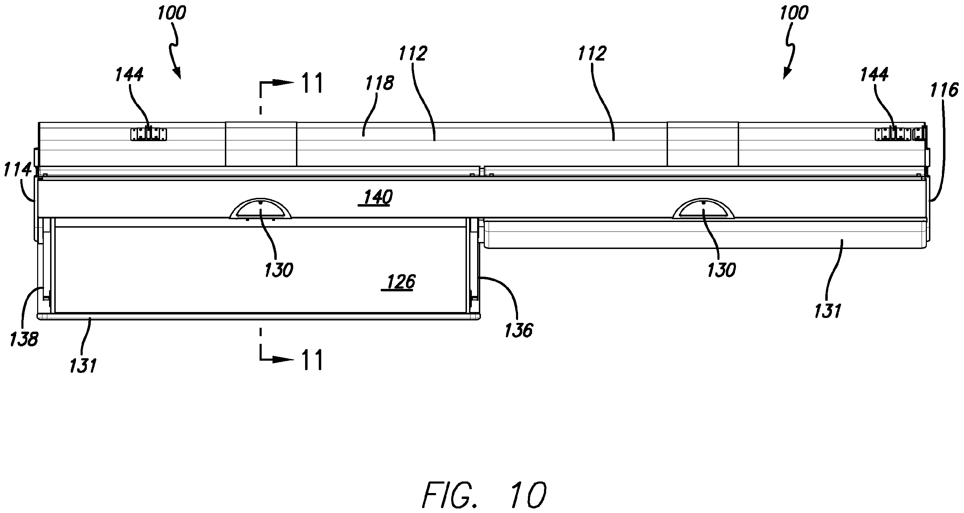

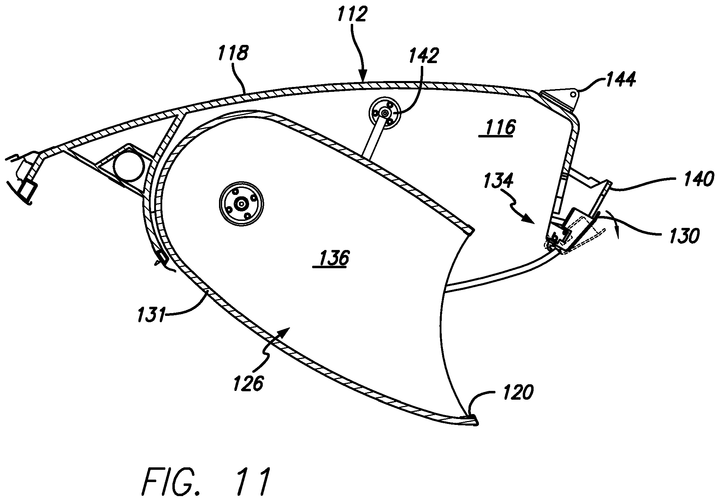

Referring now to the drawings, wherein the showings are for purposes of illustrating the present invention and not for purposes of limiting the same, FIGS. 4-11 show a first embodiment of a single/center point latching assembly for a pivot bin assembly 100. In particular, the invention is contemplated for use with overhead storage bins on passenger aircraft. However, this is not a limitation on the present invention and the pivot bin assembly 100 can be used elsewhere. It will be understood that the figures show overhead storage bins that are mounted on the right side of an aircraft (when facing forward). Left side bins are essentially a mirror image. FIGS. 4-11 show two pivot bin assemblies 100 (sometimes referred to herein as first and second pivot bin assemblies) that can be installed together in the cabin of an aircraft. The components for mounting the pivot bin assemblies 100 to the frame of an aircraft are shown in the figures, however any explanation of how the mounting is done is omitted.

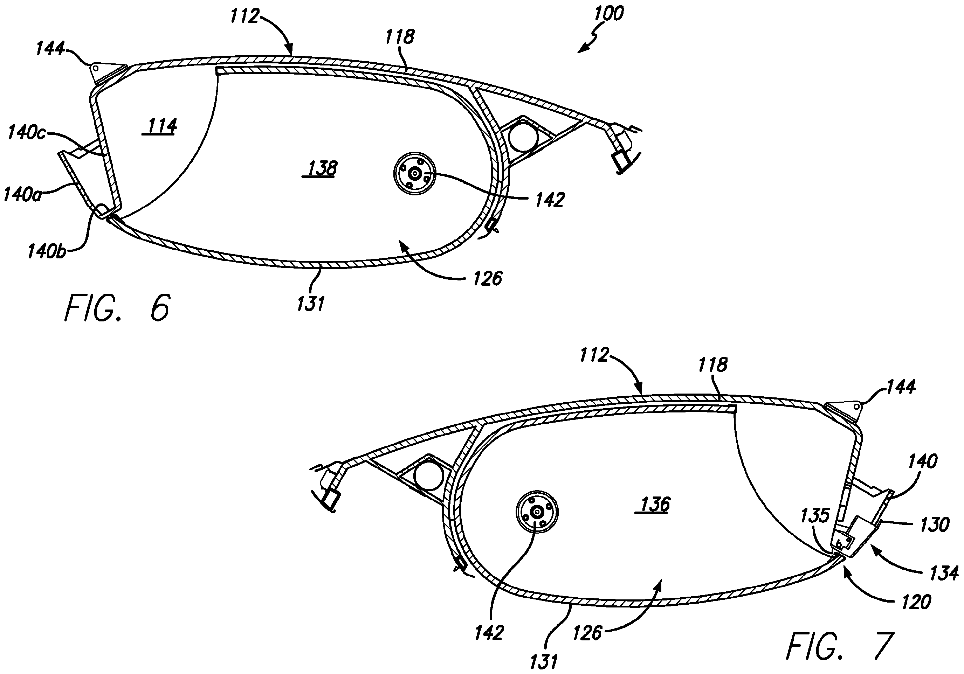

The single/center point latching pivot bin assembly 100 includes a pivot bin housing 112 that has a forward bulkhead panel 114, aft bulkhead panel 116, an aft housing panel 118 and a rigid valence panel 140 that extends between the forward and aft bulkhead panels 114 and 116. As shown in FIG. 6, in a preferred embodiment, the rigid valence panel 140 has a V or U-shape that includes a front portion 140a, a bottom portion 140b and a rear portion 140c. The ends of the U-shaped valence panel 140 can be opened or closed.

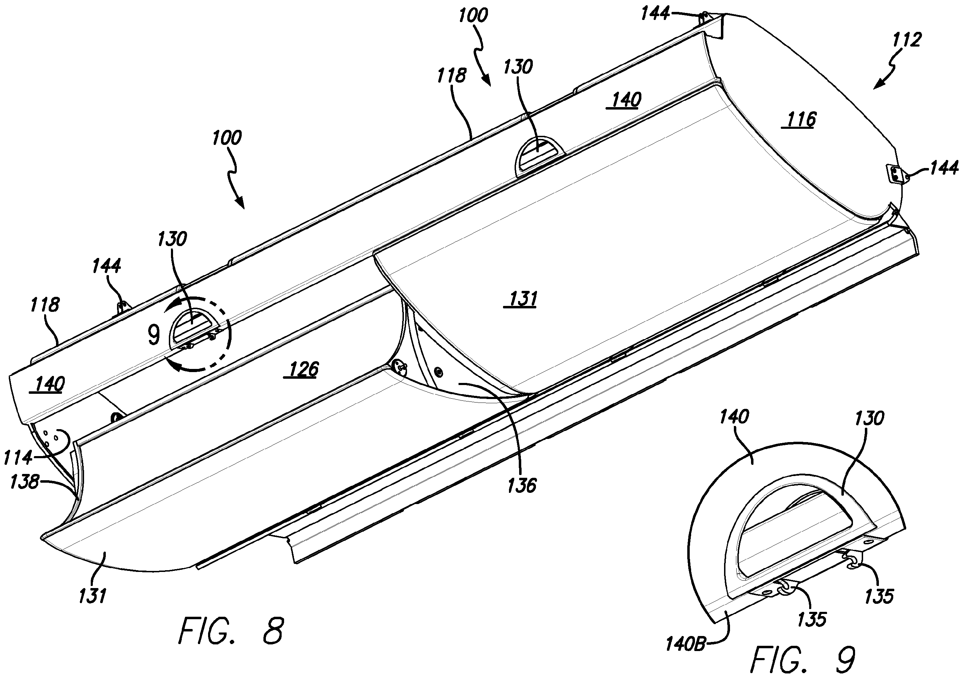

As is best shown in FIGS. 7 and 9, in a preferred embodiment, the rigid valence panel 140 includes a cut out with a center latch handle 130 and a latch mechanism 134 having at least one hook 135 mounted therein. The pivot bin assembly 100 also includes a pivot bin 126 that has an aft wall 136, forward wall 138 and a bin bottom 131 that preferably includes at least one latch striker 120 secured thereto. The pivot bin 126 is pivotable within the pivot bin housing 112 between an open and a closed position.

To close the bin 126, the hook or hooks 135 are secured on the latch striker 120 as is readily understood by one of ordinary skill in the art. The latch handle 130, latch mechanism 134, hooks 135 and other components (e.g., spring(s)) for securing the pivot bin 126 to the pivot bin housing 112 via the latch striker 120 are referred to herein together as the latch assembly. In a preferred embodiment, the latch assembly includes two hooks 135. This provides redundancy in case one of the hooks 135 fails. However, this is not a limitation on the present invention, and a single hook or more than two hooks can be used. If two or more hooks are used they are operated by the same latching mechanism and are located near center point of the pivot bin/pivot bin housing. The point or area in which the one or more hooks are latched to the striker is referred to herein as the latching location. FIG. 9 shows one of the hooks 135 in the open position and the other hook 135 in a closed position.

It will be appreciated by those skilled in the art that any latch assembly is within the scope of the present invention. For example, and latch assembly that includes a handle or lever that when actuated disengages a latch/hook from a striker to open the pivot bin is within the scope of the present invention.

It will be understood that the components of the pivot bin assembly 100 for pivoting the bin 126 open and closed (e.g., pivot mechanism 142,) are the same as the prior art pivot bin assembly 10 described above. Therefore, a discussion of these components will be omitted.

The pivot bin housing 112 can be formed as a single unit, or separate components can be bonded to one another. In a preferred embodiment, the rigid valence panel 140 is manufactured as an integrated molded component of the aft housing panel 118. By molding the valence panel 140 into the aft housing panel 118, using, for example, a crush core molding process, a rigid and continuous panel is formed. In the embodiment shown in FIGS. 4-11, rigid valence panel 140 extends across both bins. Furthermore, the forward and aft bulkhead panels 114 and 116 are formed as a unit and can be a single panel. The common forward and aft bulkhead panel 114/116 (also referred to herein as a middle bulkhead panel) is bonded to the back of the rigid valence panel and the inside of the aft housing panel 118, for example, by a dado joint or the like. It should be understood that the ends of the rigid valence panel 140 for each of the separate bin assemblies 100 is where the rigid valence panel 140 is bonded or otherwise secured to the forward and aft bulkhead panel 114/116. It will be appreciated by those skilled in the art that the forward bulkhead panel 114 and aft bulkhead panel 116 are secured to the frame of the aircraft. Therefore, the downward weight of the cargo in the bin 126 is transferred from the latching mechanism 134, down the rigid valence panel 140, to the forward and aft bulkhead panels 114 and 116 and to the body of the aircraft. In operation, the valence panel 140 exhibits similar properties to that of an I-Beam and transmits or distributes the downward force load from the latch point to the forward and aft bulkhead panels 114 and 116 through the structure of the pivot bin housing 112, and, in particular, the rigid valence panel 140. Therefore by creating a rigid valence panel 140 to replace the decorative valence panel in the prior art bin assembly 10 shown above, a single/center latch point eliminates the additional components used in a two latch point design to transfer downward force loads to the bulkhead panels. The rigid valence allows aircraft attachments to be placed at 114, 116 or anywhere along the back panel 112.

The general U-shape of the rigid valence panel 140 allows lighting to be positioned in the valence panel interior, just like the decorative valence panel of the prior art. However, the U-shape and integration of the rigid valence panel 140 with the aft housing panel 118 provides the structural capability of the rigid valence panel 140 to transfer the cargo load to the aircraft frame. This is achieved by latching the hooks 135, which extend from the bottom portion 140b of the rigid valence panel 140, to the striker 120, which is positioned on the bin bottom 131.

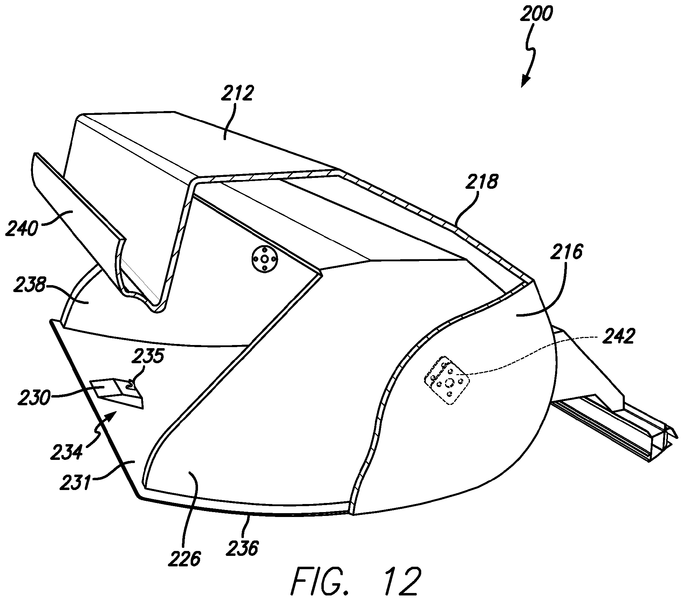

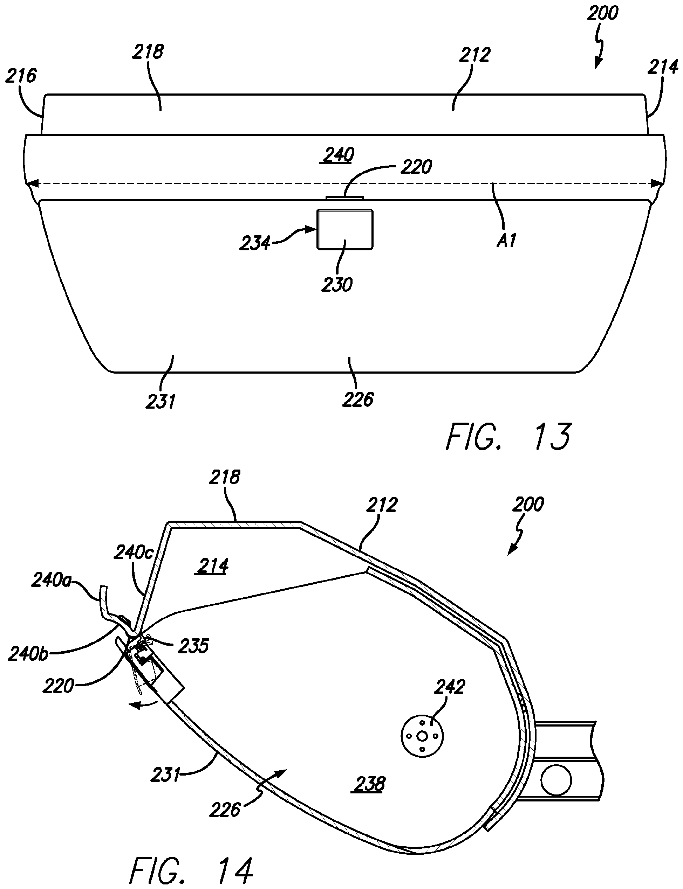

FIGS. 12-14 show a second embodiment of a pivot bin assembly 200. Pivot bin assembly 200 is similar to pivot bin assembly 100. However, as discussed below, the placement of the latch striker and the latching mechanism are reversed. Pivot bin assembly 200 includes a pivot bin housing 212 that has a forward bulkhead panel 214, aft bulkhead panel 216, an aft housing panel 218 and a rigid valence panel 240 that extends between the forward and aft bulkhead panels 214 and 216. As shown in FIG. 14, in a preferred embodiment, the rigid valence panel 240 has a V or U-shape that includes a front portion 240a, a bottom portion 240b and a rear portion 240c. A latch striker 220 is secured on the bottom portion 240b of the rigid valence panel 240. In another embodiment, the latch striker 220 can be secured on the front 240a or back 240c portion of the panel 240.

The pivot bin assembly 200 also includes a pivot bin 226 that has an aft wall 236, forward wall 238, bin bottom 231 and a center latch handle 230 that includes a latch mechanism 234 having a hook 235. The latch handle 230, latch mechanism 234, hook 235 and other components (e.g., spring(s)) for securing the pivot bin 226 to the pivot bin housing 212 via the latch striker 220 are referred to herein together as the latch assembly. It will be appreciated by those skilled in the art that any latch assembly is within the scope of the present invention. For example, any latch assembly that includes a handle or lever that when actuated disengages a latch/hook from a striker to open the pivot bin assembly is within the scope of the present invention.

It will be understood that the components of the pivot bin assembly 200 for pivoting the bin 226 open and closed (e.g., pivot mechanism 242) are the same as the prior art pivot bin assembly 10 described above. Therefore, a discussion of these components will be omitted.

The pivot bin housing 212 can be formed as a single unit, or separate components can be bonded to one another. In a preferred embodiment, the rigid valence panel 240 is manufactured as an integrated molded component of the aft housing panel 218. Therefore, the downward weight of the cargo in the bin 226 is transferred from the latching assembly 234 and striker 220, down the rigid valence panel 240 (see arrow A1 in FIG. 13), to the forward and aft bulkhead panels 214 and 216, to the brackets (now shown) and to the aircraft frame. In operation, the rigid valence panel 240 exhibits similar properties to that of an I-Beam and transmits or distributes the downward force load from the latch point to the forward and aft bulkhead panels 214 and 216 through the structure of the pivot bin housing 212, and, in particular, the rigid valence panel 240. Therefore by creating a rigid valence panel 240 to replace the decorative valence panel in the prior art bin assembly 10 shown above, a single/center latch point eliminates the additional components used in a two latch point design to transfer downward force loads to the bulkhead panels.

It will be understood that the bin does not have to be a pivot bin. It can be a moving bin or other type of articulating bin, as known in the prior art, as long as the bin is latched to the rigid valence panel of the upper bin housing.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, or may be performed, at different times. Further any specific numbers noted herein are only examples: alternative implementations may employ differing values or ranges.

The teachings of the disclosure provided herein can be applied to other systems, not necessarily the system described above. The elements and acts of the various embodiments described above can be combined to provide further embodiments.

Any patents and applications and other references noted above, including any that may be listed in accompanying filing papers, are incorporated herein by reference in their entirety. Aspects of the disclosure can be modified, if necessary, to employ the systems, functions, and concepts of the various references described above to provide yet further embodiments of the disclosure.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms. Accordingly, the actual scope of the disclosure encompasses not only the disclosed embodiments, but also all equivalent ways of practicing or implementing the disclosure under the claims.

Accordingly, although exemplary embodiments of the invention have been shown and described, it is to be understood that all the terms used herein are descriptive rather than limiting, and that many changes, modifications, and substitutions may be made by one having ordinary skill in the art without departing from the scope of the invention.

## Claims

1. An aircraft luggage bin assembly (100, 200) comprising:
a) a bin housing (112, 212) that comprises a forward bulkhead panel (114, 214), aft bulkhead panel (116, 216) and an aft housing panel (118, 218), wherein the aft housing panel comprises a rigid valence panel (140, 240) having one of a latch striker (220) or a latch assembly (130, 134, 135) secured thereto, wherein the rigid valence panel has opposite ends that are secured to the forward and aft bulkhead panels, respectively,
b) a bin (126, 226) that is movable between an open and a closed position within the bin housing, wherein the bin includes an aft wall (136, 236), a forward wall (138, 238), a bin bottom (131, 231) and the other of a latch striker (120) or a latch assembly (230, 234, 235) secured to the bin bottom, thereby defining a latching location,
wherein a downward load in the bin is distributed from the latching location, along the rigid valence panel and to the aft and forward bulkhead panels.

2. The bin assembly of claim 1 wherein the rigid valence panel (140, 240) and the aft housing panel (118, 218) are formed as a unit by a molding process.

3. The bin assembly of claim 2 wherein the latching location is located at approximately the center point between the aft wall (136, 236) and the forward wall (138, 238) of the bin (126, 226).

4. The bin assembly of claim 3 wherein the rigid valence panel (140, 240) includes a front portion (140a, 240a), a bottom portion (140b, 240b) and a rear portion (140c, 240c) that together define a valence panel interior for receiving lighting, wherein the latch assembly (130, 134, 135) or the latch striker (220) extend downwardly from the bottom portion of the rigid valence panel.

5. The bin assembly of claim 4 wherein the rigid valence panel (140) includes the latch assembly (130, 134, 135) secured thereto, wherein the latch assembly has at least one hook (135) that extends downwardly from the bottom portion (140b) of the rigid valence panel, and wherein the bin bottom (131) includes the latch striker (120).

6. The bin assembly of claim 2 wherein the molding process is a crush core molding process.

7. A method comprising the steps of:
providing a bin assembly (100, 200) that includes
a bin housing (112, 212) that includes a rigid valence panel (140, 240) for receiving lighting therein, and
a bin (126, 216) that is movable between an open and a closed position within the bin housing, moving the bin to the closed position, and
latching the bin to the rigid valence panel; and
wherein the bin housing includes a forward bulkhead panel (114, 214), aft bulkhead panel (116, 216) and an aft housing panel (118, 218), wherein the rigid valence panel is formed as a unit with the aft housing panel, wherein the rigid valence panel has one of a latch striker (220) or a latch assembly (130, 134, 135) secured thereto, wherein the rigid valence panel has opposite ends that are secured to the forward and aft bulkhead panels, respectively, wherein the bin includes an aft wall (136, 236), a forward wall, (138, 238) a bin bottom (131, 231) and the other of a latch striker (120) or a latch assembly (230, 234, 235) secured to the bin bottom, thereby defining a latching location, wherein when the bin is in the closed position, a downward load in the bin is distributed from the latching location, along the rigid valence panel and to the aft and forward bulkhead panels.

8. The method of claim 7 wherein the latching location is located at approximately the center point between the aft wall (136, 236) and the forward wall (138, 238) of the bin (126, 226).

9. The method of claim 8 wherein the rigid valence panel (140, 240) includes a front portion (140a, 240a), a bottom portion (140b, 240b) and a rear portion (140c, 240c) that together define a valence panel interior for receiving lighting, wherein the latch assembly (130, 134, 135) or the latch striker (220) extend downwardly from the bottom portion of the rigid valence panel.

10. The method of claim 9 wherein the rigid valence panel (140) includes the latch assembly (130, 134, 135) secured thereto, wherein the latch assembly has at least one hook (135) that extends downwardly from the bottom portion (140b) of the rigid valence panel, and wherein the bin bottom (131) includes the latch striker (120).

11. A bin assembly according to claim 1, wherein the bin assembly (100, 200) is a pivot bin assembly, the bin housing (112, 212) is a pivot bin housing, and the bin (126, 226) is a pivot bin, and wherein the pivot bin assembly further includes a second pivot bin (126, 226),
wherein the pivot bin housing includes a middle bulkhead panel, wherein the middle bulkhead panel is secured to the rigid valence panel (140, 240), wherein the rigid valence panel includes first and second latch assemblies (130, 134, 135) that each have at least one hook (135) extending downwardly therefrom; and
the pivot bin and second pivot bins being pivotal between opened and closed positions within the pivot bin housing, wherein the pivot bin is positioned between the forward (114, 214) and middle bulkhead panels and the second pivot bin is positioned between the middle and aft bulkhead panels (116, 216), the second pivot bin including an aft wall (136, 236), a forward wall (138, 238), and a bin bottom (131, 231), the pivot bin and second pivot bin each including a latch striker (120) secured to the bin bottom, thereby defining first and second latching locations,
wherein when the pivot bin and second pivot bin are in the closed position, downward loads in the pivot bin and second pivot bin are distributed from the first and second latching locations, along the rigid valence panel and to the aft, middle and forward bulkhead panels.

12. The pivot bin assembly of claim 11 wherein the rigid valence panel (140, 240) and the aft housing panel (118, 218) are formed as a unit by a molding process.

13. The pivot bin assembly of claim 12 wherein the rigid valence panel (140, 240) includes a front portion (140a, 240a), a bottom portion (140b, 240b) and a rear portion (140c, 240c) that together define a valence panel interior for receiving lighting, wherein the at least one of the hooks (135) of the first and second latch assemblies (130, 134, 135) extend downwardly from the bottom portion of the rigid valence panel.

14. The pivot bin assembly of claim 13 wherein the first latching location is located at approximately the center point between the aft wall (136) and the forward wall (138) of the first pivot bin (116), and wherein the second latching location is located at approximately the center point between the aft wall (136) and the forward wall (138) of the second pivot bin (116).

## Patentansprüche

1. Luftfahrzeug-Gepäckfachbaugruppe (100, 200), die Folgendes umfasst:
a) ein Fachgehäuse (112,212), das eine vordere Schottplatte (114, 214), eine hintere Schottplatte (116, 216) und eine hintere Gehäuseplatte (118, 218) umfasst, wobei die hintere Gehäuseplatte eine starre Schürzenplatte (140, 240) umfasst, die eines von einem Klinkenschließer (220) oder einer Klinkenbaugruppe (130, 134, 135) an derselben befestigt hat, wobei die starre Schürzenplatte entgegengesetzte Enden hat, die jeweils an der vorderen beziehungsweise der hinteren Schottplatte befestigt sind,
b) ein Fach (126, 226), das innerhalb des Fachgehäuses zwischen einer offenen und einer geschlossenen Stellung beweglich ist, wobei das Fach eine hintere Wand (136, 236), eine vordere Wand (138, 238), einen Fachboden (131, 231) und das andere von einem Klinkenschließer (120) oder einer Klinkenbaugruppe (130, 134, 135) an dem Fachboden befestigt hat, wodurch eine Verriegelungsposition definiert wird,
wobei eine nach unten gerichtete Last in dem Fach von der Verriegelungsposition, entlang der starren Schürzenplatte und zu der hinteren und der vorderen Schottplatte verteilt wird.

2. Fachbaugruppe nach Anspruch 1, wobei die starre Schürzenplatte (140, 240) und die hintere Gehäuseplatte (118, 218) als eine Einheit durch einen Formvorgang geformt sind.

3. Fachbaugruppe nach Anspruch 2, wobei die Verriegelungsposition annähernd an dem Mittelpunkt zwischen der hinteren Wand (136, 236) und der vorderen Wand (138, 238) des Fachs (126, 226) angeordnet ist.

4. Fachbaugruppe nach Anspruch 3, wobei die starre Schürzenplatte (140, 240) einen vorderen Abschnitt (140a, 240a), einen unteren Abschnitt (140b, 240b) und einen hinteren Abschnitt (140c, 240c) einschließt, die zusammen ein Schürzenplatteninneres zum Aufnehmen einer Beleuchtung definieren, wobei sich die Klinkenbaugruppe (130, 134, 135) oder der Klinkenschließer (220) von dem unteren Abschnitt der starren Schürzenplatte nach unten erstreckt.

5. Fachbaugruppe nach Anspruch 4, wobei die starre Schürzenplatte (140) die an derselben befestigte Klinkenbaugruppe (130, 134, 135) einschließt, wobei die Klinkenbaugruppe wenigstens einen Haken (135) hat, der sich von dem unteren Abschnitt (140b) der starren Schürzenplatte nach unten erstreckt, und wobei der Fachboden (131) den Klinkenschließer (120) einschließt.

6. Fachbaugruppe nach Anspruch 2, wobei der Formvorgang ein Crush-Core-Formvorgang ist.

7. Verfahren, das die folgenden Schritte umfasst:
das Bereitstellen einer Fachbaugruppe (100, 200), die Folgendes umfasst:
ein Fachgehäuse (112,212), das eine starre Schürzenplatte (140, 240) zum Aufnehmen einer Beleuchtung in derselben einschließt, und
ein Fach (126, 226), das innerhalb des Fachgehäuses zwischen einer offenen und einer geschlossenen Stellung beweglich ist,
das Bewegen des Fachs zu der geschlossenen Stellung und
das Verriegeln des Fachs an der starren Schürzenplatte und
wobei das Fachgehäuse eine vordere Schottplatte (114, 214), eine hintere Schottplatte (116, 216) und eine hintere Gehäuseplatte (118, 218) umfasst, wobei die starre Schürzenplatte als eine Einheit mit der hinteren Gehäuseplatte geformt ist, wobei die starre Schürzenplatte eines von einem Klinkenschließer (220) oder einer Klinkenbaugruppe (130, 134, 135) an derselben befestigt hat, wobei die starre Schürzenplatte entgegengesetzte Enden hat, die jeweils an der vorderen beziehungsweise der hinteren Schottplatte befestigt sind, wobei das Fach eine hintere Wand (136, 236), eine vordere Wand (138, 238), einen Fachboden (131, 231) und das andere von einem Klinkenschließer (120) oder einer Klinkenbaugruppe (130, 134, 135) an dem Fachboden befestigt einschließt, wodurch eine Verriegelungsposition definiert wird, wobei, wenn sich das Fach in der geschlossenen Stellung befindet, eine nach unten gerichtete Last in dem Fach von der Verriegelungsposition, entlang der starren Schürzenplatte und zu der hinteren und der vorderen Schottplatte verteilt wird.

8. Verfahren nach Anspruch 7, wobei die Verriegelungsposition annähernd an dem Mittelpunkt zwischen der hinteren Wand (136, 236) und der vorderen Wand (138, 238) des Fachs (126, 226) angeordnet ist.

9. Verfahren nach Anspruch 8, wobei die starre Schürzenplatte (140, 240) einen vorderen Abschnitt (140a, 240a), einen unteren Abschnitt (140b, 240b) und einen hinteren Abschnitt (140c, 240c) einschließt, die zusammen ein Schürzenplatteninneres zum Aufnehmen einer Beleuchtung definieren, wobei sich die Klinkenbaugruppe (130, 134, 135) oder der Klinkenschließer (220) von dem unteren Abschnitt der starren Schürzenplatte nach unten erstreckt.

10. Verfahren nach Anspruch 9, wobei die starre Schürzenplatte (140) die an derselben befestigte Klinkenbaugruppe (130, 134, 135) einschließt, wobei die Klinkenbaugruppe wenigstens einen Haken (135) hat, der sich von dem unteren Abschnitt (140b) der starren Schürzenplatte nach unten erstreckt, und wobei der Fachboden (131) den Klinkenschließer (120) einschließt.

11. Fachbaugruppe nach Anspruch 1, wobei die Fachbaugruppe (100, 200) eine Schwenkfachbaugruppe ist, das Fachgehäuse (112,212) ein Schwenkfachgehäuse ist und das Fach (126, 226) ein Schwenkfach ist und wobei die Schwenkfachbaugruppe ferner ein zweites Schwenkfach (126, 226) einschließt,
wobei das Schwenkfachgehäuse eine mittlere Schottplatte einschließt, wobei die mittlere Schottplatte an der starren Schürzenplatte (140, 240) befestigt ist, wobei die starre Schürzenplatte eine erste und eine zweite Klinkenbaugruppe (130, 134, 135) einschließt, die jeweils wenigstens einen Haken (135) haben, der sich von derselben nach unten erstreckt, und
wobei das Schwenkfach und das zweite Schwenkfach zwischen einer offenen und einer geschlossenen Stellung innerhalb des Schwenkfachgehäuses schwenkbar sind, wobei das Schwenkfach zwischen der vorderen (114, 214) und der mittleren Schottplatte angeordnet ist und das zweite Schwenkfach zwischen der mittleren und der hinteren (116, 216) Schottplatte angeordnet ist, wobei das zweite Schwenkfach eine hintere Wand (136, 236), eine vordere Wand (138, 238) und einen Fachboden (131, 231) einschließt, wobei das Schwenkfach und das zweite Schwenkfach jeweils einen Klinkenschließer (120) an dem Fachboden befestigt einschließen, wodurch eine erste und eine zweite Verriegelungsposition definiert werden,
wobei, wenn sich das Schwenkfach und das zweite Schwenkfach in der geschlossenen Stellung befinden, nach unten gerichtete Lasten in dem Schwenkfach und dem zweiten Schwenkfach von der ersten und der zweiten Verriegelungsposition, entlang der starren Schürzenplatte und zu der hinteren, der mittleren und der vorderen Schottplatte verteilt werden.

12. Fachbaugruppe nach Anspruch 11, wobei die starre Schürzenplatte (140, 240) und die hintere Gehäuseplatte (118, 218) als eine Einheit durch einen Formvorgang geformt sind.

13. Fachbaugruppe nach Anspruch 12, wobei die starre Schürzenplatte (140, 240) einen vorderen Abschnitt (140a, 240a), einen unteren Abschnitt (140b, 240b) und einen hinteren Abschnitt (140c, 240c) einschließt, die zusammen ein Schürzenplatteninneres zum Aufnehmen einer Beleuchtung definieren, wobei sich der wenigstens eine der Haken (135) der ersten und der zweiten Klinkenbaugruppe (130, 134, 135) von dem unteren Abschnitt der starren Schürzenplatte nach unten erstreckt.

14. Fachbaugruppe nach Anspruch 13, wobei die erste Verriegelungsposition annähernd an dem Mittelpunkt zwischen der hinteren Wand (136) und der vorderen Wand (138) des ersten Schwenkfachs (116) angeordnet ist und wobei die zweite Verriegelungsposition annähernd an dem Mittelpunkt zwischen der hinteren Wand (136) und der vorderen Wand (138) des zweiten Schwenkfachs (116) angeordnet ist.

## Revendications

1. Ensemble formant compartiment à bagages d'aéronef (100, 200) comprenant :
a) un boîtier de compartiment (112, 212) qui comprend un panneau formant cloison côté proue (114, 214), un panneau formant cloison côté poupe (116, 216) et un panneau de boîtier côté poupe (118, 218), dans lequel le panneau de boîtier côté poupe comprend un panneau formant lambrequin rigide (140, 240) présentant un parmi un pêne de verrouillage (220) ou un dispositif de verrouillage (130, 134, 135) fixé à celui-ci, dans lequel le panneau formant lambrequin rigide possède des extrémités opposées qui sont fixées aux panneaux formant cloison côté proue et côté poupe, respectivement,
b) un compartiment (126, 226) qui est mobile entre une position ouverte et une position fermée au sein du boîtier de compartiment, dans lequel le compartiment comprend une paroi côté poupe (136, 236), une paroi côté proue (138, 238), un bas de compartiment (131, 231) et l'autre parmi un pêne de verrouillage (120) ou un dispositif de verrouillage (230, 234, 235) fixé au bas de compartiment, ce qui définit un emplacement de verrouillage,
dans lequel une charge appliquée vers le bas et s'exerçant dans le compartiment est répartie à partir de l'emplacement de verrouillage, le long du panneau formant lambrequin rigide et vers les panneaux formant cloison côté proue et côté poupe.

2. Ensemble formant compartiment selon la revendication 1, dans lequel le panneau formant lambrequin rigide (140, 240) et le panneau de logement côté poupe (118, 218) sont formés d'un seul tenant grâce à un procédé de moulage.

3. Ensemble formant compartiment selon la revendication 2, dans lequel l'emplacement de verrouillage est situé approximativement au niveau du point central entre la paroi côté poupe (136, 236) et la paroi côté proue (138, 238) du compartiment (126, 226).

4. Ensemble formant compartiment selon la revendication 3, dans lequel le panneau formant lambrequin rigide (140, 240) comprend une partie avant (140a, 240a), une partie bas (140b, 240b) et une partie arrière (140c, 240c) qui définissent ensemble un intérieur de panneau formant lambrequin permettant de recevoir un éclairage, dans lequel le dispositif de verrouillage (130, 134, 135) ou le pêne de verrouillage (220) s'étendent vers le bas à partir de la partie bas du panneau formant lambrequin rigide.

5. Ensemble formant compartiment selon la revendication 4, dans lequel le panneau formant lambrequin rigide (140) comprend le dispositif de verrouillage (130, 134, 135) fixé à celui-ci, dans lequel le dispositif de verrouillage présente au moins un crochet (135) qui s'étend vers le bas à partir de la partie bas (140b) du panneau formant lambrequin rigide, et dans lequel le bas de compartiment (131) comprend le pêne de verrouillage (120).

6. Ensemble formant compartiment selon la revendication 2, dans lequel le procédé de moulage est un procédé de moulage avec écrasement du noyau.

7. Procédé comprenant les étapes consistant à :
fournir un ensemble formant compartiment (100, 200) qui comprend
un boîtier de compartiment (112, 212) qui comprend un panneau formant lambrequin rigide (140, 240) permettant de recevoir un éclairage en son sein, et
un compartiment (125, 216) qui est mobile entre une position ouverte et une position fermée au sein du boîtier de compartiment,
déplacer le compartiment vers la position fermée, et
verrouiller le compartiment sur le panneau formant lambrequin rigide ; et
dans lequel le boîtier de compartiment comprend un panneau formant cloison côté proue (114, 214), un panneau formant cloison côté poupe (116, 216) et un panneau de boîtier côté poupe (118, 218), dans lequel le panneau formant lambrequin rigide est formé d'un seul tenant avec le panneau de boîtier côté poupe, dans lequel le panneau formant lambrequin rigide présente un parmi un pêne de verrouillage (220) ou un dispositif de verrouillage (130, 134, 135) fixé à celui-ci, dans lequel le panneau formant lambrequin rigide présente des extrémités opposées qui sont fixées aux panneaux formant cloison côté proue et côté poupe, respectivement, dans lequel le compartiment comprend une paroi côté poupe (136, 236), une paroi côté proue (138, 238), un bas de compartiment (131, 231) et l'autre parmi un pêne de verrouillage (120) ou un dispositif de verrouillage (230, 234, 235) fixé au bas de compartiment, ce qui définit un emplacement de verrouillage, dans lequel, lorsque le compartiment est dans la position fermée, une charge appliquée vers le bas et s'exerçant dans le compartiment est répartie à partir de l'emplacement de verrouillage, le long du panneau formant lambrequin rigide et vers les panneaux formant cloison côté poupe et côté proue.

8. Procédé selon la revendication 7, dans lequel l'emplacement de verrouillage est situé approximativement au niveau du point central entre la paroi côté poupe (136, 236) et la paroi côté proue (138, 238) du compartiment (126, 226).

9. Procédé selon la revendication 8, dans lequel le panneau formant lambrequin rigide (140, 240) comprend une partie avant (140a, 240a), une partie bas (140b, 240b) et une partie arrière (140c, 240c) qui définissent ensemble un intérieur de panneau formant lambrequin permettant de recevoir un éclairage, dans lequel le dispositif de verrouillage (130, 134, 135) ou le pêne de verrouillage (220) s'étend vers le bas à partir de la partie bas du panneau formant lambrequin rigide.

10. Procédé selon la revendication 9, dans lequel le panneau formant lambrequin rigide (140) comprend le dispositif de verrouillage (130, 134, 135) fixé à celui-ci, dans lequel le dispositif de verrouillage présente au moins un crochet (135) qui s'étend vers le bas à partir de la partie bas (140b) du panneau formant lambrequin rigide, et dans lequel le bas de compartiment (131) comprend le pêne de verrouillage (120).

11. Ensemble formant compartiment selon la revendication 1, dans lequel l'ensemble formant compartiment (100, 200) est un ensemble formant compartiment pivotant, le boîtier de compartiment (112, 212) est un boîtier de compartiment pivotant, et le compartiment (126, 226) est un compartiment pivotant, et dans lequel l'ensemble formant compartiment pivotant comprend en outre un deuxième compartiment pivotant (126, 226),
dans lequel le boîtier de compartiment pivotant comprend un panneau formant cloison central, dans lequel le panneau formant cloison central est fixé au panneau formant lambrequin rigide (140, 240), dans lequel le panneau formant lambrequin rigide comprend des premier et deuxième dispositifs de verrouillage (130, 134, 135) qui présentent respectivement au moins un crochet (135) s'étendant vers le bas à partir de ceux-ci ; et
le compartiment pivotant et le deuxième compartiment pivotant étant pivotants entre des positons ouverte et fermée au sein du boîtier de compartiment pivotant, dans lequel le compartiment pivotant est positionné entre les panneaux formant cloison côté proue (114, 214) et central et le deuxième compartiment pivotant est positionné entre les panneaux formant cloison central et côté poupe (116, 216), le deuxième compartiment pivotant comprenant une paroi côté poupe (136, 236), une paroi côté proue (138, 238), et un bas de compartiment (131, 231), le compartiment pivotant et le deuxième compartiment pivotant comprenant respectivement un pêne de verrouillage (120) fixé au bas de compartiment, ce qui définit des premier et deuxième emplacements de verrouillage,
dans lequel, lorsque le compartiment pivotant et le deuxième compartiment pivotant sont dans la position fermée, des charges appliquées vers le bas dans le compartiment pivotant et le deuxième compartiment pivotant sont réparties à partir des premier et deuxième emplacements de verrouillage, le long du panneau formant lambrequin rigide et vers les panneaux formant cloison côté poupe, central et côté proue.

12. Ensemble formant compartiment pivotant selon la revendication 11, dans lequel le panneau formant lambrequin rigide (140, 240) et le panneau de boîtier côté poupe (118, 218) sont formés d'un seul tenant grâce à un procédé de moulage.

13. Ensemble formant compartiment pivotant selon la revendication 12, dans lequel le panneau formant lambrequin rigide (140, 240) comprend une partie avant (140a, 240a), une partie bas (140b, 240b) et une partie arrière (140c, 240c) qui définissent ensemble un intérieur de panneau formant lambrequin permettant de recevoir un éclairage, dans lequel le au moins un des crochets (135) des premier et deuxième dispositifs de verrouillage (130, 134, 135) s'étend(ent) vers le bas à partir de la partie bas du panneau formant lambrequin rigide.

14. Ensemble formant compartiment pivotant selon la revendication 13, dans lequel le premier emplacement de verrouillage est situé approximativement au niveau du point central entre la paroi côté poupe (136) et la paroi côté proue (138) du premier compartiment pivotant (116), et dans lequel le deuxième emplacement de verrouillage est situé approximativement au niveau du point central entre la paroi côté poupe (136) et la paroi côté proue (138) du deuxième compartiment pivotant (116).
